# EUROPEAN PATENT APPLICATION

(11) **EP 1 659 540 A2**
(43) Date of publication of application: **24.05.2006**
(21) Application number: 05257017.3
(22) Date of filing: 14.11.2005
(51) Int. Cl.: G06T 17/40

(54) **Method and apparatus for synching of images using regions of interest mapped by a user**

(30) Priority: 23.11.2004 US 630435 P; 07.03.2005 US 73877
(71) Applicant: General Electronic Company, Schenectady, NY 12345 (US)
(72) Inventor: Bharara, Aavishkar, Delhi (IN); George, Joji, Kerala 680321 (IN); Prabhakaran, Satish, Grape Gardens,Viveknagar Post, Bangalore, Karnataka 560047 (IN); Cheerankal, Paul, Kerala 683511 (IN)
(74) Representative: Pedder, James Cuthbert

(57) **Abstract**

A system and method for synchronizing a plurality of three-dimensional images. A user may manipulate three-dimensional images so the images have similar viewing parameters. A user may then link the three-dimensional images so a change in the viewing parameters in a first image may cause a corresponding change in viewing parameters in a second image. The images may be linked by selecting a region of interest for the three-dimensional images. After the images are linked, a user may select a master image or display region to navigate the viewing parameters of the other three-dimensional images. A user may also navigate the images using a wire illustrating a link between the regions of interest for the images. A user may also navigate the images using a picture-in-picture image or display region. In certain embodiments, the wires and/or cursors are optionally displayed to minimize obstructed viewing.

## Description

The present invention generally relates to a system and method for improved medical imaging. Particularly, the present invention relates to a system and method for improved synchronization of three-dimensional images.

Medical diagnostic imaging systems encompass a variety of imaging modalities, such as x-ray systems, computerized tomography (CT) systems, ultrasound systems, electron beam tomography (EBT) systems, magnetic resonance (MR) systems, and the like. Medical diagnostic imaging systems generate images of an object, such as a patient, for example, through exposure to an energy source, such as x-rays passing through a patient, for example. The generated images may be used for many purposes. For instance, internal defects in an object may be detected. Additionally, changes in internal structure or alignment may be determined. Fluid flow within an object may also be represented. Furthermore, the image may show the presence or absence of objects in an object. The information gained from medical diagnostic imaging has applications in many fields, including medicine and manufacturing.

An example of a medical diagnostic imaging system is a Picture Archival Communication System (PACS). PACS is a term for equipment and software that permits information and images, such as x-rays, ultrasound, CT, MRI, EBT, MR, or nuclear medicine for example, to be electronically acquired, stored and transmitted for viewing. Images from an exam may be viewed immediately, stored, or transmitted. The images may be viewed on diagnostic workstations by users, for example radiologists. In addition to viewing the images, the user may also view patient and/or study information associated with the image or study.

The images acquired on a PACS system are generally two-dimensional datasets. A single study may create thousands of two-dimensional datasets. The PACS workstations are typically capable of creating a three-dimensional image from the two-dimensional data sets. The three-dimensional image may be displayed for a user to examine. The user typically has several tools available to adjust the viewing parameters of the three-dimensional image. For example, the user may generally be able to rotate, pan, zoom, or perform other operations associated with a three-dimensional image. By adjusting the viewing parameters, a user may be able to view an object from different angles, thus providing a more thorough examination of the object. A more thorough view may provide for a more accurate diagnosis and treatment of a patient.

Frequently, a user may compare a plurality of three-dimensional images. For example, a user may compare a study of an object for patient A with a study of the same object for patient B. A user may also wish to compare a current study of an object for patient A with a previous study of an object for patient A. Generally, any comparison of objects may be performed. In comparing the three-dimensional images, the images are typically displayed on different view ports of a workstation. Multiple view ports or a single view port may appear on a single display screen. Regardless of the hanging protocol, the concurrent display of the three-dimensional images allows a user to compare the images.

As mentioned above, each three-dimensional image typically has a tool set available to adjust the viewing parameters for the image. The tool set may only be available for the image in which the user is working. For example, a user comparing two images may have two independent tool sets, a user comparing three images may have three independent tool sets, one tool set for each image. Manipulation of the viewing parameters of a first image may not change the viewing parameters of a second image. Accordingly, comparison of two images may be difficult as the images may have different viewing parameters.

For example, a user may adjust the viewing parameters of a first image by rotating the image and performing other associated operations on the image. In order to perform an accurate comparison of the first image to other images, a user may adjust the viewing parameters of the other images to correspond to the viewing parameters of the first image. To adjust the viewing parameters of the other images, the user may user the individual tool sets of the images to adjust the viewing parameters of each image until the viewing parameters of each image appears similar. As one can imagine, the manual adjustment of the viewing parameters may be a time consuming and tedious process.

In an effort to make the adjustment of the viewing parameters more efficient, some current PACS systems offer an automatic synchronization tool that may be used to synchronize some three-dimensional images. The automatic synchronization tool first adjusts the viewing parameters of the images to be similar. The images are then synchronized, or linked, together. The images are linked in that a change in the viewing parameters in one image may produce a corresponding change in the viewing parameters of the other images. A user may select a master image to control the movements of the other images. In such a fashion, the images may be easier to compare because the viewing parameters generally remain the same throughout the comparison.

The automatic synchronization tool, however, may only work for some three-dimensional images. In general, the automatic synchronization tool may utilize the anatomical significance of the images for operations. Various image and study parameters may be used to identify the anatomical significance of the images. For example, x, y, and z coordinates, a point of reference, the angle of the viewpoint, or algorithm for reformatting a muli-planar reformat (MPR) based on a point of interest, or the maximum intensity projection (MIP) based on an angle, may be potential useful parameters for determining the anatomical significance.

Often, however, the anatomical significance calculations of a three-dimensional image may fail or are incorrect. For example, a current study and a historical study may not have similar anatomical parameters. The parameters may be different, for example, because of patient movement during the exam, the use of different scanners, or the use of inconsistent PACS formatting. In cases where anatomical significance may not be used, the automatic synchronization tool may not be able to synchronize the three-dimensional images. Accordingly, in current systems where the automatic synchronization tool fails, a user may be stuck with the tedious and inefficient process of manually adjusting the viewing parameters for each image in order to accurately compare the images.

Accordingly, there is a need for a system and method for synchronizing three-dimensional images when an automatic synchronization tool fails. Such a system and method may allow a user to synchronize three-dimensional images without relying on anatomical significance calculations.

Certain embodiments of the present invention provide a system and method for synchronizing three-dimensional images. In an embodiment, a method for synchronizing three-dimensional images includes first manipulating the three-dimensional images to have similar viewing parameters. Then, selecting a region of interest for the three-dimensional images. Next, the method includes linking the three-dimensional images according to the regions of interest. Finally, the method includes navigating the linked three-dimensional images.

The step of linking the three-dimensional images optionally includes computing a displacement value deltaT. The displacement value deltaT may be computed according to a change in position of the regions of interest. The step of linking may also optionally include displaying at least one wire at the option of a user. The wire may illustrate the corresponding reference points of the regions of interest. The step of navigating may optionally include selecting a wire and manipulating the linked three-dimensional images by the wire.

The step of navigating may also optionally include selecting a master image or display region and manipulating the linked three-dimensional images by the master image or display region. The step of navigating also optionally includes selecting a picture-in-picture image or display region and manipulating the linked three-dimensional images by the picture-in-picture image or display region. The picture-in-picture image or display region may optionally include a plane of reference. A cursor may also be displayed at the option of a user.

In another embodiment, a system for synchronizing three-dimensional images includes a computer unit and at least one display unit. The computer unit may be for manipulating imaging data. The computer unit has computer software for maintaining consistent viewing parameters for the three- dimensional images according to a displacement value deltaT. At least on display unit concurrently displays a plurality of the three-dimensional images. The displacement value deltaT may be computed according to a change in position of a region of interest.

The computer unit may optionally include computer software for selecting a master image or display region for manipulating the three-dimensional images concurrently. The display unit may optionally display at least one wire at the option of a user, the wire illustrating corresponding reference points of the regions of interest. The wire may optionally be selected for manipulating the three-dimensional images concurrently. The display unit optionally displays a picture-in-picture image or display region for manipulating the three-dimensional images concurrently. The picture-in-picture image or display region may optionally include a plane of reference. The display unit may also displays a cursor at the option of a user.

In another embodiment, a computer - readable storage medium includes a set of instructions for a computer. The set of instructions comprises a positioning routine for positioning three-dimensional images with approximately the same viewing parameters. The set of instructions also includes a selection routine for selecting a region of interest on the three-dimensional images. The set of instructions also includes a linking routine for linking the three-dimensional images according to the regions of interest. The set of instructions also includes a navigation routine for navigating the linked three-dimensional images. The navigation routine optionally includes selecting a master image or display region and manipulating the linked three-dimensional images by the master image or display region. The navigation routine also optionally includes displaying at least one wire at the option of a user. The wire illustrates the corresponding reference points of the regions of interest and the wire being selected for manipulating the linked three-dimensional images. The navigation routine also optionally includes selecting a picture-in-picture image or display region for manipulating the linked three-dimensional images by the picture-in-picture image or display region.

The invention will now be described in greater detail, by way of example, with reference to the drawings, in which:-
Figure 1 illustrates an example of a medical imaging system that may be used in accordance with an embodiment of the present invention.
Figure 2 illustrates a system for synchronizing three-dimensional images in accordance with an embodiment of the present invention.
Figure 3 illustrates a system in which a user may manipulate three-dimensional images by grabbing/selecting an image or display region in accordance with an embodiment of the present invention.
Figure 4 illustrates a system in which a user may manipulate the linked three-dimensional images by grabbing/selecting a wire in accordance with an embodiment of the present invention.
Figure 5 illustrates a method for synchronizing three-dimensional images in accordance with an embodiment of the present invention.
Figure 6 illustrates a system for synchronizing three-dimensional images using a picture-in-picture image or display region in accordance with an embodiment of the present invention.
Figure 7 illustrates a method for synchronizing three-dimensional images using a picture-in-picture image or display region in accordance with an embodiment of the present invention.

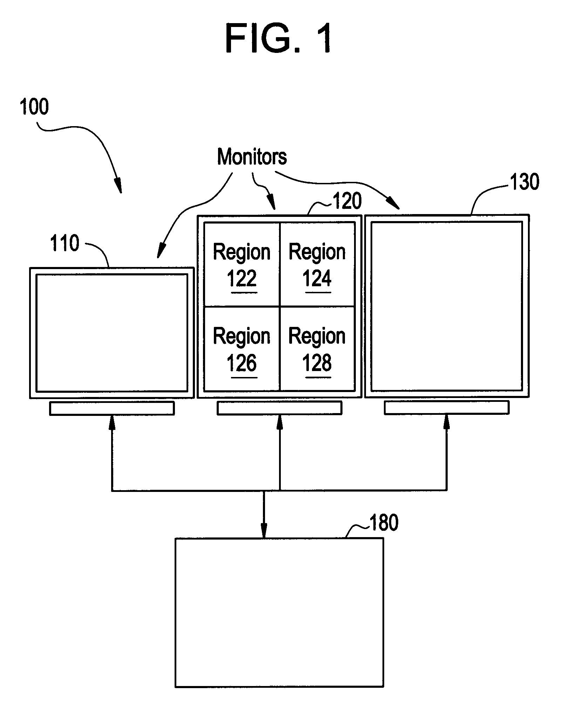

Figure 1 illustrates a system 100. The system 100 is example of a medical imaging system that may be used in accordance with an embodiment of the present invention. As an example, the system 100 shows three display units, unit 110, unit 120, and unit 130. The display units 110-130 may be computer monitors or other display devices. Units 110 and 130 include a single display region. Unit 120 includes four display regions, 122, 124, 126, and 128, respectively. Although three display units are shown in the system 100, the invention may be realized with any number of display units, including a single display unit.

Also included in the system 100 is a computer unit 180. The computer unit 180 may be any equipment or software that permits electronic medical information and images, such as x-rays, ultrasound, CT, MRI, EBT, MR, or nuclear medicine for example, to be electronically acquired, stored, or transmitted for viewing and operation. The computer unit 180 may be connected to other devices as part of an electronic network. In an embodiment, the computer unit 180 may be, or may be part of, a picture archival communication system (PACS). In an embodiment, the system 100 is a PACS with display units 110, 120, and 130 representing the display units of PACS. The computer unit 180 may represent equipment that may be generally associated with PACS, including input controls, communication processing and storage equipment. Alternatively, the computer unit 180 and display units 110, 120, and 130 may be separate units. In such a case, the display units 110, 120, and 130 may be in electrical communication with the computer unit 180. The components of the system 100 may be single units, separate units, may be integrated in various forms, and may be implemented in hardware and/or in software.

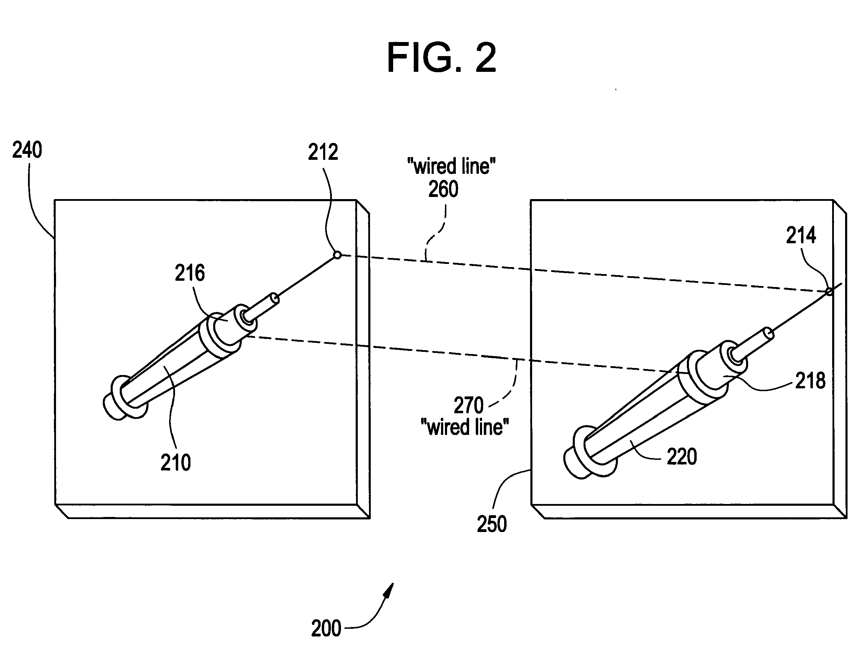

Figure 1 is just an example, and a greater number or lesser number of display units may be used in accordance with the present invention, including a single display unit. Figures 2-7 are discussed with reference to Figure 1 as an example of an embodiment of the present invention. Any hanging protocol may be used, however, and any combination of images may be displayed in accordance with the present invention. Also, the following examples illustrate synchronization of two images. However, in accordance with the present invention, any number of images may be synchronized.

Figure 2 illustrates a system 200 for synchronizing three-dimensional images in accordance with an embodiment of the present invention. In an embodiment, the system 200 shows a first three-dimensional image 210 and a second three-dimensional image 220. In an embodiment, the first image 210 and second image 220 may be of similar objects, but images from distinct studies. The studies may be of the same patient or of different patients. Moreover, the first image 210 and second image 220 may be of different objects. The objects may be from the same patient or from different patients.

The images 210, 220 are shown on view ports 240 and 250, respectively. The view ports 240, 250 may be portions of a display screen, for example display regions 122 and 124. The view ports 240, 250 may also be displayed on a full display screen, for example display units 110, 130. In an embodiment, the view port 240 may be displayed on display regions 122, 126 as well as the larger display unit 110. The view port 250 may be displayed on display regions 124, 128 as well as the larger display unit 130. In such an embodiment, the images may be synchronized and controlled on display unit 120, and enlarged for viewing on display units 110 and 130 respectively. Alternatively, view ports 240, 250 may be displayed on a single display unit, for example display unit 120. View ports 240, 250 may occupy any regions 122-128 of display unit 120. Additionally, regions 122-128 may illustrate an embodiment of comparing more than two images as one object may be displayed in each region 122-128. As mentioned above, the hanging protocol provided is only an example. Any number of display units may be used with any combination of display regions, view ports, and/or hanging protocol.

Also shown in the system 200 are two three-dimensional reference points on the image 210 and two three-dimensional reference points on the image 220. Each pair of reference points on an image may define a region of interest on the image. For example, the reference points of image 210 are a first point 212 and second point 216. The first point 212 may have coordinates{x1, y1, z1}. The second point 216 may have coordinates {x2, y2, z2}. Therefore the region of interest for image 210 may be [{x1, y1, z1}, {x2, y2, z2}]. Similarly, the reference points on the image 220 are a first point 214 and a second point 218. The first point 214 may have coordinates {xx1, yy1, zz1}. The second point 218 may have coordinates {xx2, yy2, zz2}. Accordingly, the region of interest for image 220 may be [{xx1, yy1, zz1}, {xx2, yy2, zz2}]. Although the regions of interest are discussed above with relation to two reference points, the region of interest may be defined by any number of reference points.

Also shown in the system 200 are wires 260 and 270. The wires 260 and 270 are a graphical representation illustrating to a user the corresponding reference points on the images. For example, wire 260 connects first reference point 212 on image 210 with first reference point 214 on image 220. Likewise, wire 270 connects second reference point 216 on image 210 with second reference point 218 on image 220.

A user may initiate synchronization by manipulating the images so the images have similar viewing parameters. The images may be manipulated individually by a user selecting the image and altering the viewing parameters by mouse or other input device. For example, as shown in Figure 2, the images 210 and 220 are generally shown with a similar rotation and angle of view. In an embodiment, a user has manipulated the images 210, 220 to have similar viewing parameters. The images 210, 220 do not have identical viewing parameters, however, as image 220 appears to have a slightly higher zoom value than image 210. The images 210, 220 have generally the same viewing parameters, however, and may be adequately compared if synchronized.

After the images have been manipulated to have generally the same viewing parameters, a user may select the regions of interest for the images. The regions of interest may be selected by an input device such as a computer mouse, keyboard, hotkey, or some combination thereof, for example. As discussed above, the region of interest for image 210 may be composed of reference points 212, 216 [{x1, y1, z1}, {x2, y2, z2}], respectively. The region of interest for image 220 may be composed of reference points 214, 218 [{xx1, yy1, zz1}, {xx2, yy2, zz2}], respectively. In an embodiment, the reference points should be selected so the reference points roughly correspond to the same point in each image. For example, reference point 212 may roughly correspond to reference point 214 and reference point 216 may roughly correspond to reference point 218.

After the regions of interest have been selected, a user may issue a command through a keyboard, mouse or other input device to link the images. In an embodiment, the wires 260 and 270 may be displayed on a display unit after the images are linked. In the system 200, wire 260 may indicate that the first reference point 212 on image 210 is linked with first reference point 214 on image 220. Likewise, wire 270 may indicate that the second reference point 216 on image 210 is linked with second reference point 218 on image 220. A user may also have the option of not displaying the wires and/or cursor upon linking the images.

After the images are linked, the computer unit 180 may monitor communication and/or input for selection of a master image for navigation of the three-dimensional images. Manipulation of the viewing parameters of the master image by rotating, panning, or zooming, for example, may cause a corresponding manipulation of the region of interest for the master image. The computer unit may calculate a change in position from point T1 to point T2 of the region of interest of a master image, the change in position having a value deltaT.

In an embodiment, deltaT values continuously adjust based on the manipulation of the reference points of a master image. The viewing parameters of the non-master images accordingly change as the value of the deltaT value changes. Continuing with the example above, if image 210 is selected as the master image, the region of interest comprising reference points 212 and 216 may be monitored by the computer unit 180. The computer unit 180 may compute a dynamic deltaT value during manipulation of the master image 210. The dynamic deltaT value may be used to calculate the viewing parameters for the image 220. By adjusting both a master image and non-master images a distance corresponding to a dynamic deltaT, the viewing parameters of images 210 and 220 may remain constant and synchronized.

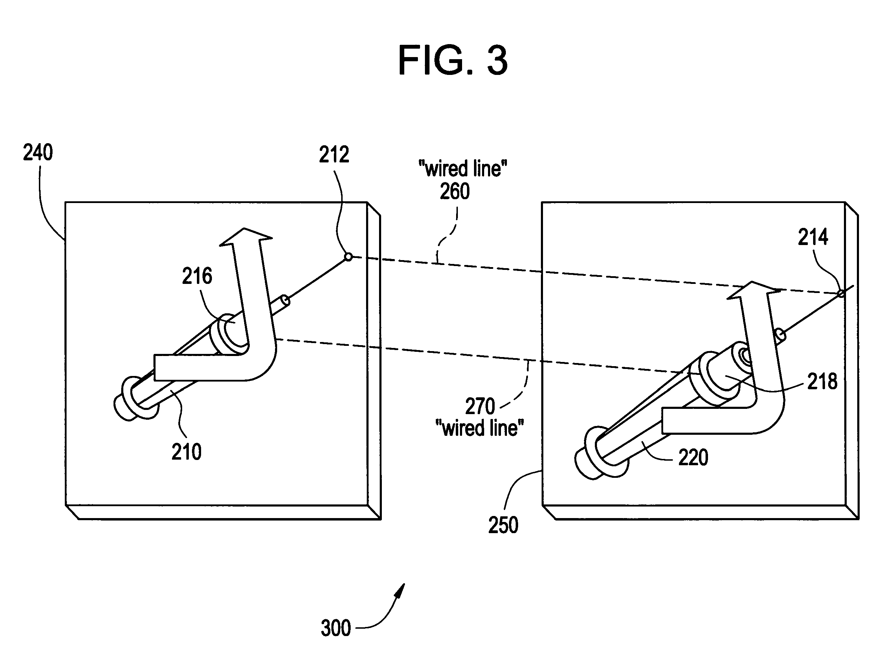

Figure 3 illustrates a system 300 in which a user may manipulate three-dimensional images by grabbing/selecting an image or display region in accordance with an embodiment of the present invention. The system 300 is similar to the system 200, but manipulation of the first image 210 and the second image 220 by a master image is shown. A user may "grab" any portion the display regions of either image 210 or 220 using a computer mouse, or other control device, and manipulate the viewing parameters of both images 210 and 220.

The image or display region that the user "grabs" or selects may be the master image. For example, a user may grab image 210 with a computer mouse by clicking and holding the mouse button. Image 210 may then become active as the master image. A user may then flip, rotate, pan, and perform other movements associated with a three-dimensional images on the image 210. Because image 210 and image 220 are linked, the image 220 may then flip, rotate, pan and perform other movements corresponding to the movements of the image 210. The wires 260 and 270 may also rotate and move according to the rotation and other movements of the images 210 and 220. As the images 210, 220 rotate and move, and the wires 260, 270 rotate and move, the images 210, 220 appear to be wired together.

As mentioned above, a user may choose to either display or hide the wires, for example wires 260, 270. In the embodiment in which a user grabs one of the images 210, 220 for synchronization, the wires 260, 270 may or may not be visible to a user. If the wires 260, 270 are visible, the wires 260, 270 rotate, move, and appear to wire the images together. If a user chooses to hide the wires, the images 210, 220 may then be manipulated without the presence of the wires 260, 270. A user may choose to hide the wires so the wires do not obstruct the view of the object.

Another option for the user may be to hide the cursor when a user engages the master image. The cursor may be present to indicate the active status of the master image. However, in an embodiment, if the user clicks the mouse to manipulate the image, the cursor not be displayed. A user may choose to hide the cursor so the cursor does not obstruct the view of the object. For example, the cursor may be visible when the mouse button is not activated. When the user presses the mouse button, however, the cursor may be hidden and the images may be moved and rotated. The options to hide the wires 260, 270 and the cursor may be used together. Such hiding of the cursor and/or wires may help the user to focus on the images as opposed to the cursor and wires. The images may remain synchronized and the obstruction caused by the cursor and/or wires may be minimized.

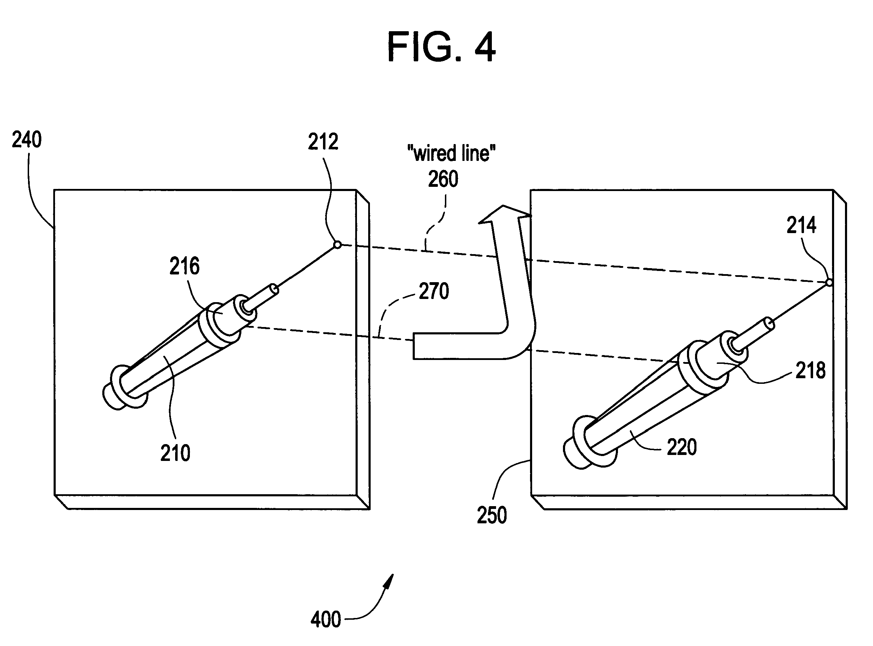

Figure 4 illustrates a system 400 in which a user may manipulate the linked three-dimensional images by grabbing/selecting a wire in accordance with an embodiment of the present invention. The system 400 is the same or similar to the system 300, but in the embodiment shown in the system 400 manipulation of images 210 and 220 by the wires 260 and 270 is shown. Grabbing/selecting the wires 260, 270 as opposed to the image or display region may be useful when the user wants to minimize obstructing the images with the cursor. Accordingly, in order to grab and manipulate the images using the wires, the wires 260, 270 should be visible in the system 400. The functions and movements available to a user in the system 300 are similarly available to a user in the system 400.

In the system 400, a user may manipulate the images 210, 220 by grabbing/selecting one of the wires 260, 270. Similar to the embodiment shown in the system 300, the computer unit may calculate a change in position from point T1 to point T2 of the region of interest of an image, the change in position having a value deltaT. The dynamic deltaT value may be used to calculate the viewing parameters for the images. By adjusting both a master image and non-master images a distance corresponding to a dynamic deltaT, the viewing parameters of images 210 and 220 may remain constant and synchronized.

However, in an embodiment of the system 400, the user may not select a master image. The image whose region of interest is used to calculate deltaT may be set by default or predetermined. For example, a user may click on one of the wires 260, 270 to manipulate the images 210 and 220. As the images 210, 220 are linked, the adjustment in viewing parameters for the images 210, 220 may be synchronized. If image 210 was previously determined to be a the default image for calculating deltat, then the region of interest of image 210 may be used to computer deltaT. Once deltaT is determined, deltaT may be used to adjust the remaining images, for example image 220.

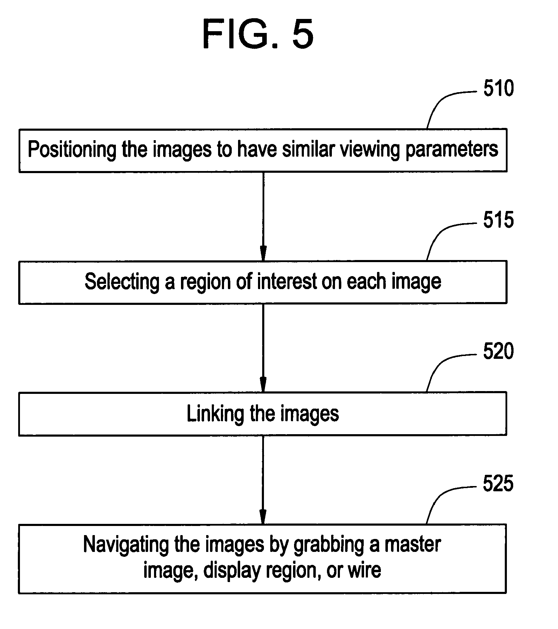

Figure 5 illustrates a method 500 for synchronizing three-dimensional images in accordance with an embodiment of the present invention. At step 510, the user may position the images to have roughly the same viewing parameters. As mentioned above, the viewing parameters may be approximately the same so a user has the same angle of view for the images. At step 515, the user may then select a region of interest on each image. The regions of interest may be selected by an input device such as a computer mouse, keyboard, hotkey, or some combination thereof, for example. As discussed above, the region of interest for image 210 may be composed of reference points 212, 216 [{x1, y1, z1}, {x2, y2, z2}], respectively. The region of interest for image 220 may be composed of reference points 214, 218 [{xx1, yy1, zz1}, {xx2, yy2, zz2}], respectively. In an embodiment, the reference points should be selected so the reference points roughly correspond to the same point in each image. Next at step 520, the user may link the images. A user may issue a command through a keyboard, mouse or other input device to link the images. Finally at step 525, the user may navigate the images by grabbing/selecting an image, display region, or wires.

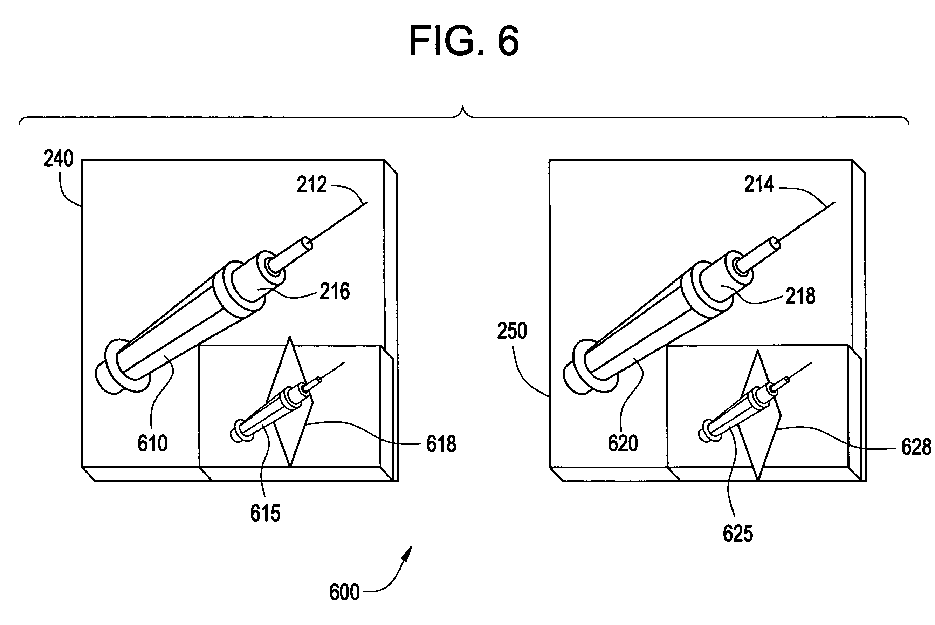

Figure 6 illustrates a system 600 for synchronizing three-dimensional images using a picture-in-picture image or display region in accordance with an embodiment of the present invention. The system 600 includes a first image 610 and a picture-in-picture (PIP) version of image 610, PIP 615. The system 600 also includes a second image 620 and a picture-in-picture version of image 620, PIP 625. Other components of the system 600 may be similar to systems 100-400. However, in the system 600, when a user commands the images to link, a picture-in-picture window appears in a sub-portion of each display region.

In operation, the PIP 615 and 625 are shown with respective planes of reference 618, 628. The planes of reference are representative of the regions of interest 212, 216 and 214, 218 as selected by the user. The planes of reference 618, 628 may be used as reference points for a user to manipulate the images. A user may select one of the PIP 615 or 625 as the master PIP. The master PIP may then be used to manipulate the first three-dimensional image 610 and second three-dimensional image 620.

The picture-in-picture embodiment of the system 600 may minimize interference and blocking of the image by the wires and cursor. A user may not want to inhibit the view of the images by the wires as shown in systems 200-400. Accordingly, the system 600 utilizes the picture-in-picture windows for navigation instead of grabbing/selecting the image, display region, or wires. Moreover, because the wires are not used to link the images, the first image 610 and second image 620 may be displayed on separate display units, for example display units 110 and 130 of Figure 1. However, the images may also be displayed on regions 122 and 124 of Figure 1 similarly to the systems 200 - 400.

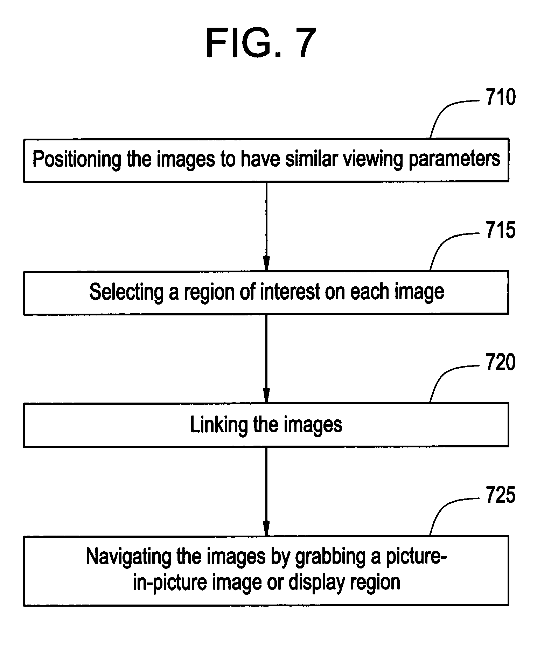

Figure 7 illustrates a method 700 for synchronizing three-dimensional images using a picture-in-picture image or display region in accordance with an embodiment of the present invention. At step 710, the user may position the images to have roughly the same viewing parameters. As mentioned above, the viewing parameters may be approximately the same so a user has the same angle of view for the images. At step 715, the user may then select a region of interest on each image. The regions of interest may be selected by an input device such as a computer mouse, keyboard, hotkey, or some combination thereof, for example. In an embodiment, the reference points should be selected so the reference points roughly correspond to the same point in each image. Next at step 720, the user may link the images. A user may issue a command through a keyboard, mouse or other input device to link the images. Finally at step 725, the user may navigate the images by grabbing/selecting a picture-in-picture image.

The system and method described above may be carried out as part of a computer - readable storage medium including a set of instructions for a computer. The set of instructions includes an input routine for positioning a plurality of three-dimensional images with approximately the same viewing parameters. The set of instructions also includes a selection routine for selecting a region of interest on the images. The set of instructions also includes a linking routine for linking the images according to the regions of interest. The linking routine optionally includes a routine to wire the regions of interest together. The set of instructions also includes a navigation routine for navigating the linked images. The navigation routine optionally includes a routine for controlling the linked images by the wires. The navigation routine also optionally includes a routine for controlling the linked images by a master image or display region. The navigation routine also optionally includes a routine for controlling the linked images by a picture-in-picture display.

## Claims

1. A method (500, 700) for synchronizing three-dimensional images (210, 220), said method comprising:
positioning (510, 710) said three-dimensional images (210, 220) to have similar viewing parameters;
selecting (515, 715) a region of interest for said three-dimensional images (210, 220);
linking (520, 720) said three-dimensional images (210, 220) according to said regions of interest; and
navigating (525, 725) said linked three-dimensional images.

2. The method of claim 1, wherein the step of linking (520, 720) said three-dimensional images (210, 220) includes computing a displacement value deltaT, said displacement value deltaT being computed according to a change in position of said regions of interest.

3. The method of claim 1, wherein the step of navigating (525) includes selecting a master image or display region and manipulating said linked three-dimensional images (210, 220) by said master image or display region.

4. The method of claim 1, wherein the step of linking (520) includes displaying at least one wire (260, 270) at the option of a user, said wire illustrating the corresponding reference points (212- 218) of the regions of interest.

5. The method of claim 4, wherein the step of navigating (525) includes selecting a wire (260, 270) and manipulating said linked three-dimensional images (210, 220) by said wire.

6. The method of claim 1, wherein the step of navigation (725) includes selecting a picture-in-picture image (615, 625) or display region and manipulating said linked three-dimensional images (210, 220) by said picture-in-picture image or display region.

7. The method of claim 6, wherein said picture-in-picture image (615, 625) or display region includes a plane of reference (618, 628).

8. The method of claim 4, further comprising displaying a cursor at the option of a user.

9. A system (100-400, 600) for synchronizing three-dimensional images (210, 220), said system comprising:
a computer unit (180) for manipulating imaging data, said computer unit (180) having computer software for maintaining consistent viewing parameters for said three- dimensional images (210, 220) according to a displacement value deltaT; and
at least one display unit (110-130) for concurrently displaying a plurality of said three-dimensional images (210, 220).

10. A computer - readable storage medium including a set of instructions for a computer, the set of instructions comprising:
a positioning routine (510, 710) for positioning three-dimensional images with approximately the same viewing parameters;
a selection routine (515, 715) for selecting a region of interest on said three-dimensional images;
a linking routine (520, 720) for linking said three-dimensional images according to said regions of interest; and
a navigation routine (525, 725) for navigating said linked three-dimensional images.
